# EUROPÄISCHE PATENTSCHRIFT

(11) **EP 2 554 455 B1**
(45) Veröffentlichungstag und Bekanntmachung des Hinweises auf die Patenterteilung: **28.11.2018**
(21) Anmeldenummer: 12172500.6
(22) Anmeldetag: 19.06.2012
(51) Int. Cl.: B62D 1/16, F16C 19/54, F16C 33/58, F16C 35/063

(54) **Lenksäule mit Lenkungslager und Lenkungslager einer Lenksäule**
Steering column with headset and headset of a steering column
Colonne de direction avec palier de direction et palier de direction d'une colonne de direction

(30) Priorität: 01.08.2011 DE 102011080162
(43) Veröffentlichungstag der Anmeldung: 06.02.2013
(73) Patentinhaber: Schaeffler Technologies AG & Co. KG, 91074 Herzogenaurach (DE)
(72) Erfinder: Erhardt, Herbert, 91074 Herzogenaurach (DE)

(56) Entgegenhaltungen:
- EP-B1- 0 941 414
- WO-A1-02/42655
- DE-B3-102009 051 107

## Beschreibung

### Gebiet der Erfindung

Die Erfindung betrifft eine Lenksäule zumindest mit einem Mantelrohr, einer Lenkspindel und wenigstens einem Lenkungslager zur drehbaren Lagerung der Lenkspindel in dem Mantelrohrum eine Mittelachse der Lenkspindel, das Lenkungslager wenigstens aufweisend einen im Mantelrohr sitzenden Außenring, einen Innenring sowie zwischen dem Außenring und einem Laufbahnabschnitt des Innenrings angeordnete Wälzkörper, wobei der Innenring an nur zwei Stellen an der Lenkspindel anliegt, und dazu einen sich axial an den Laufbahnabschnitt anschließenden ersten Abschnitt aufweist, der unter Vorspannung an der Stelle an der Lenkspindel anliegt, sowie einen zweiten Abschnitt aufweist, der axial zu dem ersten Abschnitt beabstandet ist, der sich dem Laufbahnabschnitt axial anschließt und der ein den Innenring begrenzendes erstes Ende im Zusammenwirken mit der Lenkspindel an der zweiten Stelle aufweist. Die Erfindung betrifft auch ein Lenkungslager für eine derartige Lenksäule.

### Hintergrund der Erfindung

Lenkungslager werden in verschiedenen Ausführungen eingesetzt. Häufig ist die Lenkspindel zumindest im oberen Teil der Lenksäule mittels zwei gegeneinander angestellten und vorgespannten Schrägkugellagern gelagert. Die Schrägkugellager weisen Lagerringe aus Blech auf, die kalt geformt sind.

Der Außenring sitzt in einem Lagersitz im Mantelrohr und der Innenring auf einem Lagersitz der Lenkspindel. Die Wälzkörper sind in einem Käfig zwischen den Laufbahnabschnitten des Außenringes und Innenringes gehalten und/oder geführt. DE 10 2009 051 107 B3 zeigt ein Lenkungslager der gattungsbildenden Anordnung. Der Innenring der in DE 10 2009 051 107 B3 beschriebenen Anordnung weist an einem ersten Ende ein Sicherungselement nach der Art eines Zackenrings und an einem zweiten Ende einen Lagersitz auf. Zwischen dem Sicherungselement und dem Lagersitz ist der Laufbahnabschnitt des Innenrings ausgebildet. Bei der Montage des Schrägkugellagers wird der Innenring mit dem Lagersitz auf die Lenkspindel aufgepresst, wobei sich die Lappen des Sicherungselements mit den Kanten an der Oberfläche der Lenkspindel verkrallen. WO 02/42655 A1 offenbart eine Lenksäule gemäß dem Oberbegriff des Anspruchs 1.

### Beschreibung der Erfindung

Die Aufgabe der Erfindung ist es, eine Lenksäule und ein Lenkungslager für eine Lenksäule zu schaffen, die sich effektiv und kostengünstig montieren lassen. Diese Aufgabe ist mit dem Gegenstand der Erfindung nach Anspruch 1 gelöst. Die Lenksäule ist zumindest mit einem Mantelrohr, einer Lenkspindel und wenigstens einem oder zwei der erfindungsgemäßen Lenkungslager versehen. Die Lenkspindel ist mittels zwei Lenkungslagern in dem Mantelrohr gelagert. Das jeweilige Lenkungslager weist einen im Mantelrohr vorzugsweise festsitzenden Außenring, einen Innenring sowie zwischen einem Laufbahnabschnitt des Außenrings und einem Laufbahnabschnitt des Innenrings angeordnete Wälzkörper auf. Die Wälzkörper sind bevorzugt in einem Kugelkäfig gehaltene und/oder geführte Kugeln. Die Laufbahnabschnitte sind beispielsweise mit einer inneren bzw. äußeren Kugellaufbahn versehen.

Das oder die Lenkungslager sind Schrägkugellager. Der Fachmann versteht unter Schrägkugellagern die Lager, in denen die durch den Wälzkontakt der Kugeln mit der inneren Kugellaufbahn am Innenring und mit der äußeren Kugellaufbahn am Außenring sowie durch das Kugelzentrum verlaufenden Kontaktlinien um einen Kontaktwinkel zu einer Radialebene geneigt sind. Dabei liegen die Kugelzentren auf einer Umfangsbahn in der Radialebene. Der Kontaktwinkel α ist 90° > α > 0°, liegt vorzugsweise in einem Bereich 60° ≥ α ≥ 30°:
Der Innenring liegt an nur zwei Stellen, an jeder Stelle jeweils mit einem Abschnitt, an der Lenkspindel an. Die anderen Abschnitte des Innenrings sind radial nicht an der Lenkspindel abgestützt. Der Laufbahnabschnitt und mit diesem verbundene eventuelle Übergangs- oder Verbindungsabschnitte, begrenzen teils axial und radial einen hohlen Ringraum, der radial außen und beidseitig axial von dem Innenring und radial innen von der Lenkspindel umgeben ist. Der Innenring weist einen sich auf der einen Seite axial an den Laufbahnabschnitt anschließenden ersten Abschnitt auf, mit dem das Schrägkugellager an einer ersten Stelle der beiden Stellen an der Lenkspindel abgestützt ist. Der erste Abschnitt ist vorzugsweise hohlzylindrisch ausgebildet. Alternativ kann der erste Abschnitt auch beliebige anders ausgebildete Querschnitte aufweisen, beispielsweise viereckig, ausgebildet sein, und diesbezüglich mit seiner Geometrie mit einem entsprechenden Querschnitt der Lenkspindel korrespondieren. Der erste Abschnitt ist nabenförmig für einen Presssitz auf der Lenkspindel ausgeführt, so dass dieser unter Vorspannung an einer Stelle der Lenkspindel anliegt. Der Innenring ist mittels des Presssitzes des ersten Abschnitts axial und radial an der Lenkspindel fixiert.

An der zweiten Stelle der beiden Stellen steht der Innenring über einen zweiten Abschnitt mit der Lenkspindel in Kontakt. Der zweite Abschnitt ist axial zu dem ersten Abschnitt beabstandet und schließt sich auf der anderen Seite axial dem Laufbahnabschnitt an. Der zweite Abschnitt ist beispielsweise durch einen Passsitz zwischen der Lenkspindel und dem Innenring oder wie an der ersten Stelle auch durch einen Presssitz gebildet. Erfindungsgemäß weist der zweite Abschnitt jedoch ein Sicherungselement nach der Art eines Zackenrings mit umfangsseitig zueinander benachbarte Lappen oder Zacken auf. Die Lappen oder Zacken sind umfangsseitig durch axiale Aussparungen voneinander getrennt, die sich in das erste Ende des Innenrings erstrecken. Der Innenring hört an einer Seite an dem ersten Ende auf. Jeder der Lappen bzw. Zacken weist wenigstens eine Kante auf, die zumindest teilweise in die Oberfläche der Lenkspindel verkrallt ist. Der Innenring ist mittels des zweiten Abschnittes axial auf der Lenkspindel fixiert.

Erfindungsgemäß weist ein Abschnitt des Innenrings wenigstens ein aus dem einen Abschnitt radial hervorstehendes Haltemittel auf, durch welches der Außenring in wenigstens eine mit der Mittelachse der Lenkspindel gleichgerichtete axiale Richtung partiell hintergriffen ist.

Eine Ausgestaltung der Erfindung sieht vor, dass der erste Abschnitt das Haltemittel aufweist. Der Innenring des Lenkungslagers weist demnach an dem Abschnitt, der mittels Presssitz auf der Lenkspindel sitzt, das wenigstens eine Haltermittel auf, mit dem zumindest der Innenring und der Außenring zu einer vormontierten Einheit aneinander gehalten sind.

Halteelemente sind Sicherungsringe, O-Ringe und Dichtungen, die an entsprechender Stelle auf den Innenring aufgeschoben sind, und die eine Trennung der Einzelteile des Lenkungslagers voneinander verhindern und dementsprechend den Außenring berührend hintergreifen können. Mit Ausnahme eventuell einer Dichtung sollten die Haltemittel, wenn das Lenkungslager in die Lenksäule eingebaut ist, den Außenring berührungslos hintergreifen.

Eine weitere Ausgestaltung der Erfindung sieht vor, dass das Haltemittel wenigstens ein, vorzugsweise mehrere gleichmäßig am Umfang verteilte - zum Beispiel 3 Stück, aus dem ersten Abschnitt hervorstehende und einteilig mit dem ersten Abschnitt ausgebildete(s) Formelement(e) ist (sind). Da der Innenring vorzugsweise aus dünnem Blech, beispielsweise aus Blech mit einer Blechstärke des Halbzeugs von 1 bis 1,6 mm ist, sind die Formelemente zum Beispiel radial von innen nach außen heraus geformte oder durchgestellte Nasen. Alternativ sind die Halteelemente teilweise aus dem Innenring frei geschnittene und radial nach außen gebogene Lappen.

Der Vorteil der Erfindung gegenüber dem gattungsbildenden Stand der Technik liegt mit Sicht auf das Lenkungslager darin, dass das Lenkungslager inklusive seiner Einzelteile Innenring, Wälzkörper, ggf. einem Käfig und dem Außenring zu einer in sich selbst haltenden Baueinheit vormontiert ist. Der Aufwand für den Transport, die Lagerhaltung des Lenkungslagers ist reduziert. Weiterhin ist der Aufwand während der Montage des Lenkungslagers in die Lenksäule reduziert. Die Lenkspindel kann mittels eines derartigen Lagers in Position gehalten werden. Es besteht keine Gefahr, dass einzelne Teile des Lenkungslagers während der Montage verloren gehen oder vertauscht werden.

Nach einer weiteren Ausgestaltung der Erfindung schließt sich dem ersten Abschnitt axial ein einteilig mit dem ersten Abschnitt ausgebildeter dritter Abschnitt des Innenrings an. Der dritte Abschnitt ist, wenn der Innenring an den zwei zuvor beschriebenen Stellen auf der Lenkspindel sitzt, radial berührungsfrei zur Lenkspindel. Der erste Abschnitt verläuft axial zwischen dem Laufbahnabschnitt und dem dritten Abschnitt. Der dritte Abschnitt geht in ein den Innenring begrenzendes und zur Lenkspindel berührungsloses zweites Ende des Innenrings über. Der Innenring hört an der vom ersten Ende abgewandten Seite an dem zweiten Ende auf. Der dritte Abschnitt und das zweite Ende verlaufen, wenn der Innenring auf der Lenkspindel sitzt, umfangsgerichtet mit radialen Abständen zur Oberfläche der Lenkspindel um die Mittelachse der Lenkspindel.

Der Innenring sitzt, wie anfangs beschrieben, mittels des ersten Abschnitts mit Presssitz auf der Welle. Lenkspindeln weisen, wie schon erwähnt, relativ große Form- und Abmessungstoleranzen der zylindrischen Außenkontur auf. Der Presssitz des ersten Abschnitts ist deshalb schwierig zu verwirklichen. Die aus dem Presssitz resultierenden Spannungen in dem ersten Abschnitt können bei ungünstiger Toleranzlage, also bei hoher Überdeckung zwischen Innenring und ersten Abschnitt, sehr hoch werden. Bei Anordnungen des bisher bekannten Standes der Technik endet der erste Abschnitt unmittelbar und abrupt an dem zweiten Ende, das deshalb aufgrund der durch den Presssitz verursachten Spannungen im Material des dritten Abschnitts rissgefährdet ist.

Dem ersten unter Spannung stehenden Abschnitt schließt sich gemäß der Erfindung jedoch ein dritter Abschnitt an, der nicht unter Spannung steht, weil dieser berührungslos zur Lenkspindel ist. Die die aus dem Presssitz im ersten Abschnitt resultierenden Spannungen setzen sich zunächst über den ersten Abschnitt hinaus in dem dritten Abschnitt fort, da der erste und der dritte Abschnitt einteilig - einmaterialig miteinander ausgebildet sind. In dem dritten Abschnitt "verlaufen sich" die Spannungen, d.h. sie reduzieren sich dort bis in normale ertragbare Größenordnungen, so dass der dritte Abschnitt als Entlastungsabschnitt bezeichnet werden kann. Spannungsspitzen werden vermieden, da der Innenring nicht mehr abrupt am ersten Abschnitt endet, sondern in den Entlastungsabschnitt übergeht. Die Rissgefahr ist somit aufgehoben.

Der Laufbahnabschnitt und der erste Abschnitt, sowie der Laufbahnabschnitt und der zweite Abschnitt gehen entweder direkt ineinander über oder sind über Zwischenabschnitte miteinander verbunden. Der Innenring ist aus den einzelnen Abschnitten, erster Abschnitt, Laufbahnabschnitt, zweiter Abschnitt und dritter Abschnitt durch Fügen oder Formschluss zusammengesetzt, alternativ und bevorzugt jedoch einteilig - einmaterialig aus den Abschnitten gebildet.

Innenring und Außenring sind vorzugsweise Umformteile aus Blech oder Bandmaterial, beispielsweise aus dem Material C45, und weisen zumindest an der Oberfläche eine Härte von 470+ 100HV auf. Für die Herstellung des erfindungsgemäß gestalteten verlängerten Innenrings durch Kaltumformen, wie Ziehen, werden insgesamt nicht mehr oder nur unwesentlich mehr Halbzeuge verbraucht, als beim Ziehen des nach dem bisherigen Stand der Technik bekannten Innenrings, da ein Großteil des Abschnitts durch Abstrecken von Material der Ausgangsdicke auf geringere Wandstärken erzeugt werden kann.

Zum Abbau der Spannungen muss der dritte Abschnitt eine ausreichende axiale Ausdehnung aufweisen. Eine Ausgestaltung der Erfindung sieht deshalb vor, dass der dritte Abschnitt axial wenigstens genauso breit ist, wie der erste Abschnitt axial breit ist.

Eine weitere Ausgestaltung der Erfindung sieht vor, dass der dritte Abschnitt das Halteelement aufweist, so dass Presssitz des ersten Abschnittes vorteilhaft nicht durch die hervorstehenden Haltemittel partiell unterbrochen ist.

Mit einer weiteren Ausgestaltung der Erfindung ist vorgesehen, dass der Außenring an einem radial in Richtung Lenkspindel gerichteten Ringabschnitt axial von dem Halteelement berührungslos hintergriffen ist, wobei der Ringabschnitt berührungslos zum Innenring konzentrisch zur Rotationsachse des Lenkungslagers angeordnet ist. Der Ringabschnitt ist beispielsweise eine Lagerschulter, in welche der Laufbahnabschnitt übergeht. Der Ringabschnitt kann alternativ ein radial nach innen gezogener scheibenförmiger Bord sein, der sich dem Laufbahnabschnitt anschließt..

Schließlich sieht eine Ausgestaltung der Erfindung vor, dass das oder die Lenkungslager Schrägkugellager sind wobei sich den Wälzkörpern axial in eine Richtung ein zur Rotationsachse des Lenkungslagers rotationssymmetrischer Abschnitt des Laufbahnabschnittes und axial in eine andere Richtung ein zur Rotationsachse des Lenkungslagers rotationssymmetrischer Abschnitt des Außenrings anschließt, die, wenn das Lenkungslager in der Lenksäule verbaut ist, axial gegen die Kugeln gespannt sind. Das Haltemittel hintergreift, wenn das Lenkungslager in die Lenksäule montiert ist, den radial in Richtung der Lenkspindel ragenden rotationssymmetrischen Abschnitt an einer von den Wälzkörpern abgewandten Seite partiell, ohne diesen zu berühren. Wenn das Lenkungslager als vormontierte selbsthaltende Einheit noch nicht in die Lenksäule montiert ist, kann Bewegungsspiel zwischen den Wälzkörpern und Lagerringen ausgebildet sein, das durch das an dem Außenring anliegende Haltemittel begrenzt ist.

### Beschreibung der Zeichnungen

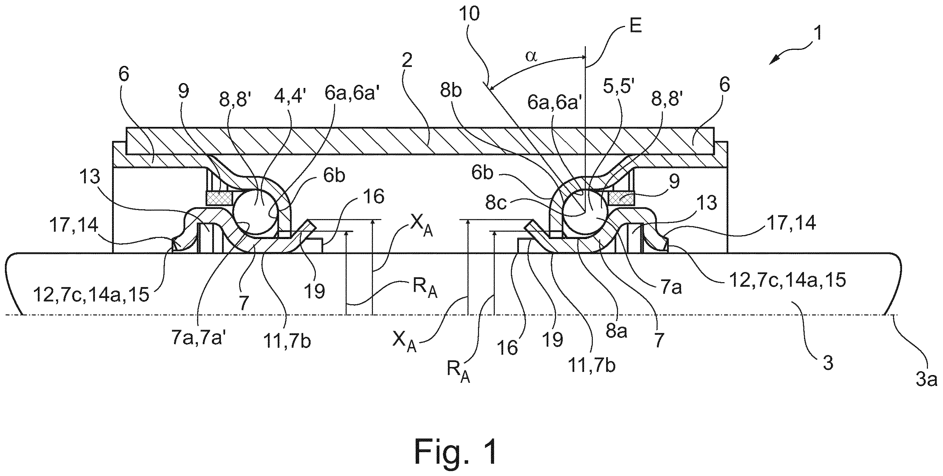

Figur 1: Figur 1 zeigt eine Lenksäule 1 längs geschnitten im Halbschnitt oberhalb einer Mittelachse 3a und vereinfacht dargestellt.

Die Lenksäule 1 ist mit einem Mantelrohr 2, einer Lenkspindel 3 und zwei Ausführungsbeispielen der erfindungsgemäßer Lenkungslager 4 und 5 versehen. Die Lenkspindel 3 ist mittels der Lenkungslager 4 und 5 in dem Mantelrohr 2 gelagert. Jedes der Lenkungslager 4 oder 5 weist einen im Mantelrohr festsitzenden Außenring 6, einen Innenring 7 sowie zwischen einem Laufbahnabschnitt 6a des Außenrings 6 und einem Laufbahnabschnitt 7a des Innenrings 7 angeordnete Wälzkörper 8 in Form von Kugeln 8' auf. Die Kugeln 8' sind umfangsseitig um die Mittelachse 3a der Lenkspindel 3 gleichmäßig verteilt und sind in einem Kugelkäfig 9 gehalten und geführt. Die Laufbahnabschnitte 6a und 7a sind im Wesentlichen durch Kugellaufbahnen 6a' und 7a' gebildet.

Die Lenkungslager 4 und 5 sind Schrägkugellager 4' bzw. 5'. Die durch den Wälzkontakt 8a der Kugeln 8' mit der inneren Kugellaufbahn 7a' am Innenring 7 und den Wälzkontakt 8b mit der äußeren Kugellaufbahn 6a' am Außenring 6 sowie durch das jeweilige Kugelzentrum 8c verlaufenden Kontaktlinien 10 sind um einen Kontaktwinkel α zu einer Radialebene E geneigt, der a= 45° ist.

Der Innenring 7 liegt an nur zwei Stellen 11 und 12 an der Lenkspindel 3 an. Der andere Teil des Innenrings 7, insbesondere der Laufbahnabschnitt 7a ist radial nicht an der Lenkspindel 3 abgestützt, sondern ein hohler Ringraum 13, der radial außen und beidseitig axial von dem Innenring 7 und radial innen von der Lenkspindel 3 begrenzt ist.

Der Innenring 7 weist einen sich auf der einen Seite axial an den Laufbahnabschnitt 7a anschließenden und einmaterialig mit diesem ausgebildeten ersten Abschnitt 7b auf, mit dem das jeweilige Schrägkugellager 4' bzw. 5' an einer ersten Stelle 11 der beiden Stellen 11 und 12 an der Lenkspindel 3 abgestützt ist. Der erste Abschnitt 7b ist hohlzylindrisch ausgebildet. und nabenförmig für einen Presssitz auf der Lenkspindel 3 ausgeführt, so dass dieser unter Vorspannung an der Stelle 11 an der Lenkspindel 3 anliegt.

Der Innenring 7 steht an der zweiten Stelle 12 über einen einmaterialig mit dem Laufbahnabschnitt 7a ausgebildeten zweiten Abschnitt 7c mit der Lenkspindel 3 im Kontakt. Der zweite Abschnitt 7c ist axial zu dem ersten Abschnitt 7b beabstandet und schließt sich auf der anderen Seite axial dem Laufbahnabschnitt 7a an.

Der zweite Abschnitt 7c weist ein Sicherungselement 17 nach der Art eines Zackenrings umfangsseitig zueinander benachbarte Lappen 14 auf, von denen nur jeweils einer pro Lenkungslager 4 bzw. 5 abgebildet ist. Die Lappen 14 sind umfangsseitig durch sich in das erste Ende 15 erstreckende axiale Aussparungen voneinander getrennt. Jeder der Lappen 14 weist eine Kante 14a auf, die dazu vorgesehen ist, sich an der Stelle 12 zumindest teilweise in die Oberfläche der Lenkspindel 3 zu verkrallen.

Der erste Abschnitt 7b des jeweiligen Innenrings 7 weist an seinem zweiten Ende 16 mehrere umfangsseitig zueinander benachbarte Haltemittel 19 auf, von denen jeweils nur eines in Figur 1 dargestellt ist. Die Haltemittel 19 stehen aus dem ersten Abschnitt 7b soweit radial hervor, dass ein radialer Ringabschnitt 6b des Außenringes 6 im dargestellten eingebauten Zustand axial berührungslos von den Halteelementen 19 hintergriffen ist, durch welche der Außenring 6 in wenigstens eine mit der Mittelachse 3a der Lenkspindel 3 gleichgerichtete axiale Richtung partiell hintergriffen ist. Das jeweilige Lenkungslager 4 bzw. 5 ist vor seiner Montage aus den einzelnen Teilen Außenring 6, Innenring 7 und Wälzkörpern 8 mittels der Haltemittel 19 zu einer in sich selbst haltenden Einheit aneinander gehalten, da der radiale Abstand X_{A} der Haltemittel 19 von der Mittelachse 3a zur äußeren Kante größer als der Innenradius R_{A} des Lochs des Ringabschnitts 6b ist.

Die Haltemittel 19 sind partiell aus dem ersten Abschnitt 7b frei geschnittene und radial nach außen gebogene Lappen, von denen jeder Innenring 7 vorzugsweise drei aufweist, die gleichmäßig zueinander umfangsbenachbart sind .

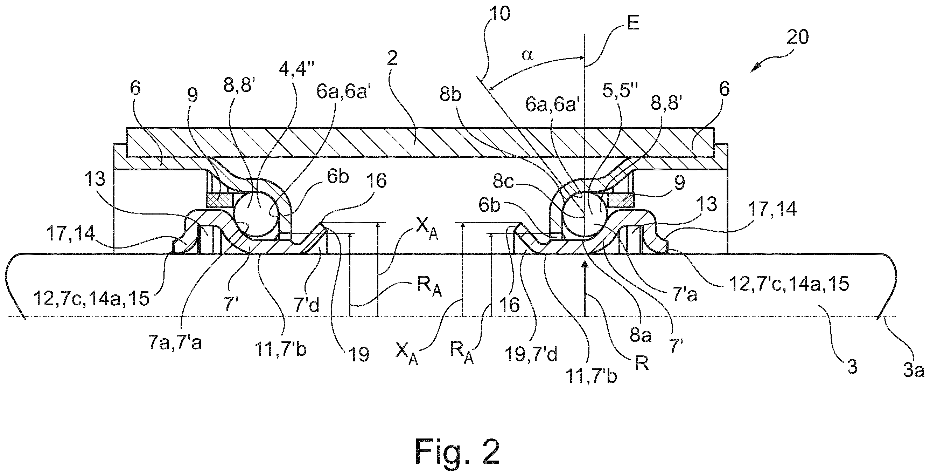

Figur 2: Der Aufbau der mit Figur 2 dargestellten Lenksäule 20 entspricht im Wesentlichen dem Aufbau der mit Figur 1 dargestellten Lenksäule 1. Die Lenkungslager 4 und 5 der Lenksäule 20 sind Schrägkugellager 4" und 5", die sich jeweils durch den Innenring 7' von den Schrägkugellagern 4' bzw. 5' der Lenksäule 1 unterscheiden.

Dem ersten Abschnitt 7'b schließt sich axial ein einteilig mit dem ersten Abschnitt 7'b ausgebildeter dritter Abschnitt 7'd des Innenrings 7' an. Der dritte Abschnitt 7'd ist radial berührungsfrei zur Lenkspindel 3 und geht axial in ein den Innenring 7' begrenzendes und zur Lenkspindel 3 berührungsloses zweites Ende 16 des Innenrings 7' über.

Der dritte Abschnitt 7'd erweitert sich zu dem zweiten Ende 16 hin trichterartig, so dass dieser ein hohlkegelartiges Gebilde ergibt. Die Innenabmessungen des dritten Abschnitts 7'd werden zum zweiten Ende 16 hin größer. Die Erweiterung kann als Zentrieröffnung beim Aufsetzen des Innenringes auf die Lenkspindel als Einführfase genutzt werden. Die kleinsten radialen Innenabmessungen des dritten Abschnittes 7'd sind größer als der größte Innenradius R ersten Abschnitts 7'b. Der dritte Abschnitt 7'd ist gleichzeitig Haltemittel 19. Das Haltemittel 19 steht gesamtumfänglich aus dem dritten Abschnitt 7'd soweit radial hervor, dass ein radialer Ringabschnitt 6b des Außenringes 6 im dargestellten eingebauten Zustand axial berührungslos von dem umlaufenden und durch Aufweiten geformten Halteelement 19 hintergriffen ist, durch welches der Außenring 6 in wenigstens eine mit der Mittelachse 3a der Lenkspindel 3 gleichgerichtete axiale Richtung hintergriffen ist. Das jeweilige Lenkungslager 4 bzw. 5 ist vor seiner Montage aus den einzelnen Teilen Außenring 6, Innenring 7' und Wälzkörpern 8 mittels des Haltemittels 19 zu einer in sich selbst haltenden Einheit aneinander gehalten, da der äußere Radius X_{A} des Haltemittels 19 als der Innenradius R_{A} des Lochs des Ringabschnitts 6b ist.

## Patentansprüche

1. Lenksäule (1, 20) zumindest mit einem Mantelrohr (2), einer Lenkspindel (3) und wenigstens einem Lenkungslager (4, 5) zur drehbaren Lagerung der Lenkspindel (3) in dem Mantelrohr (2) um eine Mittelachse (3a) der Lenkspindel (3), das Lenkungslager (4, 5) wenigstens aufweisend einen im Mantelrohr (2) sitzenden Außenring (6), einen Innenring (7, 7') sowie zwischen dem Außenring (6) und einem Laufbahnabschnitt (7a, 7'a) des Innenrings (7, 7') angeordnete Wälzkörper (8), wobei der Innenring (7, 7') an nur zwei Stellen (11, 12) an der Lenkspindel (3) anliegt, und dazu einen sich axial an den Laufbahnabschnitt (7a, 7'a) anschließenden ersten Abschnitt (7b, 7'b) aufweist, der unter Vorspannung an der Stelle (11) an der Lenkspindel (3) anliegt, sowie einen zweiten Abschnitt (7c, 7'c) aufweist, der axial zu dem ersten Abschnitt (7b, 7'b) beabstandet ist, der sich dem Laufbahnabschnitt (7a, 7'a) axial anschließt und der ein den Innenring (7, 7') begrenzendes erstes Ende (15) im Zusammenwirken mit der Lenkspindel (3) an der zweiten Stelle (12) aufweist, wobei ein Abschnitt (7b, 7'd) des Innenrings (7, 7') wenigstens ein radial hervorstehendes Haltemittel (19) aufweist, durch welches der Außenring (6) in wenigstens eine mit der Mittelachse (3a) der Lenkspindel (3) gleichgerichtete axiale Richtung partiell hintergriffen ist, dass der Innenring (7, 7') an dem ersten Ende (15) des Innenrings wenigstens eine Kante (14a) im Zusammenwirken mit der Lenkspindel (3) an der zweiten Stelle (12) aufweist, **dadurch gekennzeichnet, dass** das erste Ende (15) mindestens zwei der Kanten (14a) aufweist, wobei jede der Kanten (14a) jeweils an einem einteilig mit dem Innenring (7) ausgebildeten zackenartigen Lappen (14) ausgebildet ist, welcher sich jeweils zur Oberfläche der Lenkspindel (3) erstreckt, wobei die wenigstens zwei der Lappen (14) durch am ersten Ende (15) ausgebildete Ausnehmungen (15a) umfangsseitig voneinander getrennt sind.

2. Lenksäule nach Anspruch 1, **dadurch gekennzeichnet, dass** der erste Abschnitt (7b) das Haltemittel (19) aufweist.

3. Lenksäule nach Anspruch 2, **dadurch gekennzeichnet, dass** das Haltemittel (19) wenigstens ein aus dem ersten Abschnitt (19) hervorsteht und einteilig mit dem ersten Abschnitt (19) ausgebildet ist.

4. Lenksäule nach Anspruch 1, **dadurch gekennzeichnet, dass** sich dem ersten Abschnitt (7'b) axial ein einteilig mit dem ersten Abschnitt (7'b) ausgebildeter dritter Abschnitt (7'd) radial berührungsfrei zur Lenkspindel (3) so anschließt, dass der erste Abschnitt (7'b) axial zwischen dem Laufbahnabschnitt (7'a) und dem dritten Abschnitt (7'd) verläuft, und dass der dritte Abschnitt (7'd) in ein den Innenring (7') begrenzendes und zur Lenkspindel (3) berührungsloses zweites Ende (16) des Innenrings (7') übergeht, wobei der dritte Abschnitt (7'd) das Halteelement (19) aufweist.

5. Lenksäule nach Anspruch 4, **dadurch gekennzeichnet, dass** das Haltemittel (19) wenigstens ein aus dem dritten Abschnitt (7'd) hervorstehendes und einteilig mit dem dritten Abschnitt (7'd) radial nach außen ausgeformt ist.

6. Lenksäule nach Anspruch 2, 3, 4 oder 5, **dadurch gekennzeichnet, dass** der Außenring (6) an einem radial in Richtung Lenkspindel gerichteten Ringabschnitt (6b) axial von dem Halteelement (19) berührungslos hintergriffen ist, wobei der Ringabschnitt (6b) berührungslos zum Innenring (7, 7') konzentrisch zur Rotationsachse (3a) des Lenkungslagers (4, 5) angeordnet ist.

7. Lenkungslager nach Anspruch 1, **dadurch gekennzeichnet, dass** der Außenring (6), der Innenring (7) und die Wälzkörper (8) mittels des Haltemittels (19) in einer wenigstens aus dem Außenring (6), dem Innenring (7, 7') und den Wälzkörpern (8) gebildeten und in sich selbst haltenden Einheit aneinander gehalten sind.

## Claims

1. Steering column (1, 20) at least having a casing tube (2), a steering spindle (3) and at least one steering bearing (4, 5) for mounting the steering spindle (3) in the casing tube (2) such that it can be rotated about a centre axis (3a) of the steering spindle (3), the steering bearing (4, 5) at least having an outer ring (6) which is seated in the casing tube (2), an inner ring (7, 7') and rolling bodies (8) which are arranged between the outer ring (6) and a raceway section (7a, 7'a) of the inner ring (7, 7'), the inner ring (7, 7') bearing against the steering spindle (3) at only two points (11, 12), and to this end having a first section (7b, 7'b) which axially adjoins the raceway section (7a, 7'a) and bears against the steering spindle (3) at the point (11) under prestress, and having a second section (7c, 7'c) which is spaced apart axially from the first section (7b, 7'b), axially adjoins the raceway section (7a, 7'a), and has a first end (15) which delimits the inner ring (7, 7') in interaction with the steering spindle (3) at the second point (12), a section (7b, 7'd) of the inner ring (7, 7') having at least one radially projecting holding means (19), by way of which the outer ring (6) is engaged behind partially in at least one axial direction which is directed in the same direction as the centre axis (3a) of the steering spindle (3), that the inner ring (7, 7') has, at the first end (15) of the inner ring, at least one edge (14a) in interaction with the steering spindle (3) at the second point (12), **characterized in that** the first end (15) has at least two of the edges (14a), each of the edges (14a) being configured in each case on a prong-like lobe (14) which is configured in one piece with the inner ring (7) and extends in each case to the surface of the steering spindle (3), the at least two of the lobes (14) being separated from one another on the circumferential side by way of recesses (15a) which are configured at the first end (15).

2. Steering column according to Claim 1, **characterized in that** the first section (7b) has the holding means (19) .

3. Steering column according to Claim 2, **characterized in that** the holding means (19) projects at least one from the first section (19) and is configured in one piece with the first section (19).

4. Steering column according to Claim 1, **characterized in that** the first section (7'b) is adjoined axially radially without contact with the steering spindle (3) by a third section (7'd) which is configured in one piece with the first section (7'b), in such a way that the first section (7'b) runs axially between the raceway section (7'a) and the third section (7'd), and **in that** the third section (7'd) merges into a second end (16) of the inner ring (7'), which second end (16) delimits the inner ring (7') and is not in contact with the steering spindle (3), the third section (7'd) having the holding element (19).

5. Steering column according to Claim 4, **characterized in that** the holding means (19) is formed radially to the outside at least one projecting from the third section (7'd) and in one piece with the third section (7'd).

6. Steering column according to Claim 2, 3, 4 or 5, **characterized in that** the outer ring (6) is engaged behind axially by the holding element (19) without contact on a ring section (6b) which is directed radially in the direction of the steering spindle, the ring section (6b) being arranged without contact with the inner ring (7, 7') concentrically with respect to the rotational axis (3a) of the steering bearing (4, 5).

7. Steering bearing according to Claim 1, **characterized in that** the outer ring (6), the inner ring (7) and the rolling bodies (8) are held against one another by means of the holding means (19) in a unit which is formed at least from the outer ring (6), the inner ring (7, 7') and the rolling bodies (8) and is retained within itself.

## Revendications

1. Colonne de direction (1, 20) présentant au moins un tube d'enveloppe (2), une broche de direction (3) et au moins un palier de direction (4, 5) qui monte à rotation la broche de direction (3) dans le tube d'enveloppe (2) autour d'un axe central (3a) de la broche de direction (3), le palier de direction (4, 5) présentant au moins une bague extérieure (6) placée dans le tube d'enveloppe (2), une bague intérieure (7, 7') ainsi qu'un corps de roulement (8) disposé entre la bague extérieure (6) et une section (7a, 7'a) de piste de roulement de la bague intérieure (7, 7'), la bague intérieure (7, 7') ne reposant contre la broche de direction (3) qu'en deux emplacements (11, 12) et présentant dans ce but une première section (7b, 7'b) qui se raccorde axialement à la section (7a, 7'a) de piste de roulement et qui repose sous précontrainte à l'emplacement (11) de la broche de direction (3), ainsi qu'une deuxième section (7c, 7'c) disposée à distance axiale de la première section (7b, 7'b), se raccordant axialement à la section (7a, 7'a) de piste de roulement et présentant une première extrémité (15) qui délimite la bague intérieure (7, 7') en coopération avec la broche de direction (3) au deuxième emplacement (12), une section (7b, 7'd) de la bague intérieure (7, 7') présentant au moins un moyen de retenue (19) débordant radialement par lequel la bague extérieure (6) est chevauchée partiellement par l'arrière dans au moins une direction axiale ayant la même orientation que l'axe central (3a) de la broche de direction (3), que la bague intérieure (7, 7') présente à la première extrémité (15) de la bague intérieure un ou plusieurs chants (14a) qui coopère avec la broche de direction (3) au deuxième emplacement (12),
**caractérisée en ce que**
la première extrémité (15) présente au moins deux des chants (14a), chacun des chants (14a) étant configuré sur une patte (14) en forme de poche formée d'une seule pièce avec la bague intérieure (7) et s'étendant vers la surface de la broche de direction (3), les deux ou plusieurs pattes (14) étant séparées les unes des autres à leur périphérie par des découpes (15a) formées sur la première extrémité (15).

2. Colonne de direction selon la revendication 1, **caractérisée en ce que** la première section (7b) présente le moyen de retenue (19).

3. Colonne de direction selon la revendication 2, **caractérisée en ce que** le moyen de retenue (19) déborde au moins un hors de la première section (19) et est configuré d'une seule pièce avec la première section (19) .

4. Colonne de direction selon la revendication 1, **caractérisée en ce qu'**une troisième section (7'd) formée d'un seul tenant avec la première section (7'b) se raccorde axialement à la première section (7'b) sans contact radial avec la broche de direction (3) de telle sorte que la première section (7'b) s'étend axialement entre la section (7'a) de piste de roulement et la troisième section (7'd) et **en ce que** la troisième section (7'd) se prolonge en une deuxième extrémité (16) de la bague intérieure (7'), délimitant la bague intérieure (7') et sans contact avec la broche de direction (3), la troisième section (7'd) présentant le moyen de retenue (19).

5. Colonne de direction selon la revendication 4, **caractérisée en ce que** le moyen de retenue (19) est formé radialement vers l'extérieur au moins un débordant de la troisième section (7'd) et d'une seule pièce avec la troisième section (7'd).

6. Colonne de direction selon les revendications 2, 3, 4 ou 5, **caractérisée en ce que** la bague extérieure (6) est chevauchée par l'arrière axialement et sans contact par le moyen de retenue (19) sur une section annulaire (6b) orientée radialement en direction de la broche de direction, la section annulaire (6b) n'ayant pas de contact avec la bague intérieure (7, 7') et étant disposée concentriquement par rapport à l'axe de rotation (3a) du palier de direction (4, 5).

7. Palier de direction selon la revendication 1, **caractérisé en ce que** la bague extérieure (6), la bague intérieure (7) et les corps de roulement (8) sont formés au moyen du moyen de retenue (19) en une unité autoportant formée au moins de la bague extérieure (6), de la bague intérieure (7, 7') et des corps de roulement (8).
